# EUROPEAN PATENT APPLICATION

(11) **EP 1 702 957 A1**
(43) Date of publication of application: **20.09.2006**
(21) Application number: 05101983.4
(22) Date of filing: 14.03.2005
(51) Int. Cl.: C08L 53/02, C08L 25/00, C08L 25/10, C08F 297/04

(54) **Hydrogenated block copolymer composition for overmoulding onto thermoplastics**

(71) Applicant: KRATON Polymers Research B.V., 1030 BH Amsterdam (NL)
(72) Inventor: Maris, Catherine A.L. Monnet Centre, 1348 Ottignies, Louvain-La-Neuve (BE); Oosterbosch, Sonja M. Monnet Centre, 1348 Ottignies, Louvain-La-Neuve (BE)
(74) Representative: Kortekaas, Marcel C.J.A.

(57) **Abstract**

A composition is provided which can be used for overmolding onto a polar substrate, comprising:
a) 100 pbw of one or more hydrogenated monovinyl aromatic block copolymer having at least two resinous endblocks of polymerized monovinyl arene and at least one elastomeric midblock comprising polymerized and subsequently hydrogenated conjugated diene or dienes,
b) from 10 to 60 pbw of a random copolymer of monovinyl arene and a diene, with a diene content of between 5 and 25% and a melt flow rate (MFR, ASTM D 1238-95 @ 150°C/2.16 kg) of 10 to 40 g/10 minutes, and optionally
c) from 0 to 150 pbw of a plasticizer,
d) from 0 to 100 pbw of one or more engineering thermoplastics, and
e) from 0 to 2 pbw of antioxidants,

and shaped polymer substrates overmolded with said compositions.

## Description

### Technical field

The present invention relates to overmolding compositions based on a hydrogenated monovinyl aromatic block copolymer as thermoplastic elastomer with improved adhesion when overmolded onto engineering thermoplastics used as substrate.

### Background art

Thermoplastic elastomer compositions for overmolding on polar substrates such as polyesters and polyamides are known. Examples of such compositions may be found in e.g., US5723543, US5969034, US5609962, or US5750268.

As is known from US patents Nos. 5002625, 5149589 and 5472782, there is a demand for composite materials, based on the one hand on engineering thermoplastics such as, toughened polystyrene (TPS), acrylonitrile butadiene styrene polymer (ABS), polycarbonates (PC), polyamides, polyacetals, modified polyphenylene oxides, polybutylene terephthalate, polysulfone, total aromatic polyester, etc. and on the other hand on a thermoplastic elastomer (TPE) such as styrenic block copolymers. In these US patents, various TPE compositions for overmolding are described using a condensation-polymerization type thermoplastic block copolymer selected from polyether block amide, thermoplastic polyester, and thermoplastic polyurethane in combination with a TPE component, such as a hydrogenated styrenic block copolymer. Although excellent bonding is achieved, the condensation-polymerization type thermoplastic block copolymer components are generally very expensive.

It is an object of the present invention to provide new overmolding compositions based on hydrogenated monovinyl aromatic styrenic block copolymers that have improved adhesion, as indicated by an adhesion of at least 10 N when determined by performing the Renault D41 1916 test on a Zwick mechanical tester, on to substrates such as polystyrene (PS) or toughened polystyrene (TPS), acrylonitril butadiene styrene copolymers (ABS), polycarbonate (PC) and copolyesters (e.g. PETG).

### Disclosure of the invention

Accordingly a composition is provided which can be used for overmolding onto an engineering thermoplastic polymer substrate (I), comprising:
a) 100 pbw of one or more hydrogenated monovinyl aromatic block copolymer having at least two resinous endblocks of polymerized monovinyl arene and at least one elastomeric midblock comprising polymerized and subsequently hydrogenated conjugated diene or dienes,
b) from 10 to 60 pbw of a random copolymer of monovinyl arene and preferably styrene and a diene, with a diene content of between 5 and 25% and a melt flow rate (MFR, ASTM D 1238-95 @ 150°C/2.16 kg) of 10 to 40 g/10 minutes, and optionally
c) from 0 to 150 pbw of a plasticizer,
d) from 0 to 100 pbw of one or more engineering thermoplastics (II), and
e) from 0 to 2 pbw of antioxidants.

It is another object of the present invention to provide novel composite articles having the aforementioned overmolding composition applied onto the engineering thermoplastic polymer substrate: e.g., water goggles or other similar products (members) which are required to have high strength and waterproof performance, plastic telephone receivers, handles (grips) or other similar products in which the grip portion is made of a thermoplastic elastomer so as to be soft, plastic headlight covers for automobiles or other similar products in which a thermoplastic elastomer is attached to the edge portion of the cover as an integral portion thereof so as to serve as a packing member when the cover is installed, air shielding packings, valve parts, power transmitting parts such as flexible couplings and gears, etc.

### Mode(s) for carrying out the invention

Hydrogenated styrenic block copolymers are known in the art. Such copolymers are available as triblock copolymers (made sequentially or by coupling a diblock copolymer); as tetrablock copolymers or multiblock copolymers; as linear copolymers and also as branched or radial copolymers (using a multifunctional coupling agent and/or a multifunctional copolymer during its preparation). Such copolymers are typically based on styrene and either butadiene or isoprene or a mixture thereof. However, similar copolymers are obtained using substituted styrenes as monovinyl arenes and/or using C5 to C8 conjugated dienes.

Hydrogenation of such block copolymers is also conventional. As indicated, such polymers are commercially available as, for instance, KRATON® G polymers.

For the composition of the invention, the nature of the monomers or the linearity is not a very determining factor. What is important is that a polymer is used having a relatively high molecular weight in combination with specific values of the vinyl content (e.g., the percentage of conjugated butadiene built into the polymer backbone by 1,2-addition rather than 1,4-addition, or similar in case of a higher conjugated diene) in the range of from 15 to 75 mole percent, and preferably from 20 to 50 mole percent, and a content of poly(monovinyl arene) in the range of from 20 to 60 wt% and preferably in the range of from 20 to 40 wt%.

It will be appreciated that block copolymers that are prepared by means of coupling of living diblock copolymers with a coupling agent and termination of remaining living block copolymers will finally contain small amounts (i.e. less than 20 mole% and preferably less than 15 mole% and more preferably less than 10 mole%) of diblock copolymer.

The apparent molecular weights of the complete block copolymers and each of the intermediate precursors have been determined by Liquid High Performance Size Exclusion Chromatography (LHPSEC), and expressed in terms of standard poly(styrene) (ASTM D-5296-97).

By thermoplastic elastomer is meant a block copolymer having at least two end-blocks A made of polymerized monovinyl aromatic compound, thus giving a glassy, (resinous) aromatic segment, and a mid-block B made up at least predominantly of polymerized diene monomer, thus giving an amorphous elastomeric segment. The polymers can be linear, A-B-A, radial, (A-B) X, or mixtures thereof. Some A-B diblock polymer can be present but preferably at least 70 weight percent of the block copolymer is A-B-A or radial (or otherwise branched so as to have two or more terminal (resinous) A blocks per molecule) so as to impart strength. Generally, 80 to 100 weight percent of the block copolymer has two or more terminal (resinous) A blocks per molecule and it is preferred to have essentially no diblock. In the above radial formula the n is an integer of at least 3, generally 3 to 50, more generally 6 to 13, and the X is the remnant of a coupling agent.

The A-B-A compositions can be made by either sequential polymerization or coupling. In the sequential polymerization technique, the monovinyl aromatic monomer is first introduced to produce an aromatic block followed by the introduction of the butadiene monomer to produce the rubbery midblock followed by additional monovinyl aromatic compound to produce the other terminal aromatic block. This is broadly disclosed in U.S. 3,231,635. The production of such polymers and also radial polymers is broadly disclosed in U.S. 5,194,530. Another patent broadly disclosing the anionic polymerization of thermoplastic elastomers using an organo alkali metal initiator is U.S. 4,764,572.

It will be appreciated that block copolymers formed by coupling of living diblock copolymers will contain minor amounts of terminated initial diblock copolymer, depending on the coupling efficiency (CE).

Preferred triblock copolymers to be used as component (a) have been either prepared by sequential polymerization or by coupling with a CE of at least 90%.

The aromatic component can be any 8-30 carbon atom monoalkenyl aromatic compound or mixture thereof, such as styrene and substituted styrenes such as o-methyl-styrene, p-methylstyrene, dimethylstyrene, α-methylstyrene, diphenyl ethylenes and the like, but preferably is styrene.

The diene can be any 4 to 8 carbon atom conjugated diene or mixtures thereof but is preferably 1,3-butadiene or isoprene, most preferably 1,3-butadiene.

When the diene is butadiene the polymerization may be carried out so as to give vinyl contents of 10 to 50 mole percent or it may be carried out using a polar compound as is known in the art to give 51 to 90 mole percent vinyl.

It is well known in the art to regulate the polymerization toward the 1,2-addition of butadiene. Broadly, this can be done by utilizing an organic polar compound such as an ether, including cyclic ethers, polyethers and thioethers or an amine including secondary and tertiary amines. Said polymerization methods are generally known from e.g. US 3,686,366; US 3,700,748 and US-5,194,535.

Examples of preferred ethers include diethoxypropane, 1,2-dioxyethane (dioxo) and 1,2-dimethyoxyethane (glyme).

The thermoplastic elastomers utilized in the compositions of this invention are selectively hydrogenated thermoplastic elastomers in the sense that they contain little or no ethylenic unsaturation. By selective hydrogenation is meant that the aliphatic unsaturation is significantly removed while leaving unaffected most of the aromatic unsaturation. Hydrogenation processes are known from U.S. Patent 3,634,549, U.S. 3,670,054, U.S. 3,700,633 and Re 27,145.

Each individual aromatic endblock must have a molecular weight of less than 25,000. Preferably the endblocks have a molecular weight within the range of 5,000 to 20,000, most preferably 5,000 to 15,000.

The molecular weight of the copolymer will generally be at least 50,000. For linear A-B-A polymers, the molecular weight will generally be within the range of 50,000 to 450,000. Actually, the upper limit is dictated by viscosity considerations and can be as high as can be tolerated and still be processable. The most preferred molecular weight for linear A-B-A polymers is 100,000 to 300,000. With radial polymers, the molecular weight can be much higher since these polymers have a lower viscosity for a given total molecular weight. Thus, for radial polymers the molecular weight generally will be in the range of 50,000 to 1 million, preferably 200,000 to 600,000.

The total monovinyl aromatic content of the block copolymer is at most 40 weight percent, and generally is within the range of 10 to 40 weight percent based on the total weight of the block copolymer, preferably 20 to 35 weight percent.

Block copolymers utilized in this invention, which are hydrogenated to remove the ethylenic unsaturation as noted hereinabove, can be regarded as S-EB-S polymers, wherein the S refers to the monovinyl aromatic, generally styrene, endblocksand the EB represents ethylene/butylene which is the structure resulting from the hydrogenation of polymerized 1,3-butadiene. With isoprene the designation would be S-EP-S, the EP representing ethylene/propylene.

More preferred block copolymers to be used as component (a) in the compositions of the present invention are linear ABA block copolymers, wherein A represents a poly(styrene) block, wherein B represents a hydrogenated poly(butadiene) block, wherein the 1,2-addition (vinyl content) before hydrogenation is from 65-90 mole percent, and said block copolymers have an apparent molecular weight of from 100,000 to 300,000 and a PSC of from 20 to 35 wt%.

Component (b)

Random copolymers of monovinyl arene and preferably styrene and conjugated dienes such as butadiene and isoprene or mixtures thereof are known. Such copolymers may be made by methods known per se, e.g. suspension polymerization and solution polymerization.

These polymers may be made at various diene content and/or molecular weight (generally expressed in terms of the MFR).

In component (b) to be used in the composition of the present invention, the diene used as comonomer is preferably butadiene. The diene is preferably used in an amount of from 10 to 25 % by weight and more preferably in an amount of from 12-20 % by weight. The MFR is preferably between 20 and 30 g/10 minutes at 150°C/2,16 kg.

Suitable examples include several random copolymer grades of butadiene and styrene marketed under trademark NOVA such as NOVA™ XP808.

The composition preferably comprises from 10 to 30 wt% of component (b), based on the weight of the complete composition, i.e. from 15 to 50 parts by weight of component (b) per 100 parts by weight of component (a). More preferably the composition comprises from 13 to 25 wt% and most preferably from 14 to 20 wt%, based on the weight of the complete composition, of component (b).

Component (c)

Suitable plasticizers include plasticizing oils like low aromatic content hydrocarbon oils that are paraffinic or naphthenic in character (carbon aromatic distribution < 5%, preferably < 2%, more preferably 0% as determined according to DIN 51378). Those products are commercially available from the Royal Dutch/Shell Group of companies, like SHELLFLEX™, CATENEX™, and ONDINA™ oils. Other oils include KAYDOL™ oil from Witco, or TUFFLO™ oils from Arco or PRIMOL™ oils from EXXON-MOBIL.

Other plasticizers may also be added, like olefin oligomers; low molecular weight polymers (< 30,000 g/mol) like liquid polybutene, liquid polyisoprene copolymers, liquid styrene/isoprene copolymers or liquid hydrogenated styrene/conjugated diene copolymers; vegetable oils and their derivatives; or paraffin and microcrystalline waxes.

Plasticizers such as paraffinic oils which may be used in the composition according to the present invention should be capable of being melt processed with other components of the composition without degrading.

More preferably the plasticizer represents a plasticizing oil selected from paraffinic or naphtenic oils, in an amount of from 20 to 150 pbw, relative to 100 pbw of component (a) and more preferably in an amount of from 20 to 100 pbw.

Component (d)

To achieve sufficient hardness and adhesion properties, one or more engineering thermoplastics may be added. Although polyolefins were used in the past as they are cheap and commonly applied in combination with styrenic block copolymers, but attractive adhesion properties could not be reached by such compositions when used for overmolding.

It has now surprisingly been found that other engineering thermoplastics can be applied more successfully in the compositions for overmolding according to the present invention. Examples of these more preferred components (d) are polystyrene (PS), toughened polystyrene (TPS) or acrylonitril-butadiene-styrene (ABS) copolymers, of which PS or TPS are more preferred and TPS is most preferred. In this respect the present inventors have found that superior adhesion is obtained if an engineering thermoplastic polymer is used similar or identical to the substrate it is to be applied on. For instance, excellent overmolding compositions have been found containing TPS or ABS as added component.

Component (d) may be included in the compositions of the present invention in proportions of from 3 to 16 wt%, preferably from 4 to 10 wt% and more preferably of from 4 to 8 wt%, relative to the weight of the complete composition.

Component (e)

Antioxidants and other stabilizing ingredients can also be added to protect the composition of the present invention from degradation induced by heat, light and processing or during storage.

Several types of antioxidants can be used, either primary antioxidants like hindered phenols or secondary antioxidants like phosphite derivatives or blends thereof. Particularly preferred is IRGANOX™ 1010 alone or in combination with IRGANOX PS800. These antioxidants are generally present in an amount within the range of 0.01 to 4, preferably 0.1 to 1 pbw per 100 parts of component (a).

Additional auxiliaries

Other rubber components may be incorporated into the compositions according to the present invention. It is also known in the art that various other components can be added to manage the overall economics of the overmolded article (fillers). Examples of such fillers include DURCAL™ 5, a calcium carbonate from Omya, and ANKERMAG™ B20, a magnesium oxide from Magnifin. These fillers may be present in an amount of from 0 to 150 parts by weight per 100 parts of component (a).

Other ingredients which do not affect the essential elastomeric characteristics of the composition may be present as well. Such ingredients include pigments, fragrances, flame retardants, surfactants, waxes, flow promoters, solvents, and materials added to enhance processability and pellet handling of the composition.

Preparation of the composition

No particular limitation is imposed on the preparation process of the compositions according to the present invention.

Therefore, there may be used any process such as a twin-screw extruder thereby obtaining an intimate solution of the composition aimed at.

Use of the composition

The composition according to the present invention is used for overmolding onto hard substrates, grips, medical articles like medical tubing and other rubbery articles, in particular onto a polar substrate. This technology is known and described in for instance WO 98/01506.

More in particular the composition shows an improved adhesion when overmolded onto TPS, ABS, PC, or PETG.

The present invention will hereinafter be described more specifically by reference to the following examples and comparative examples, however without restricting its scope to these specific embodiments.

Incidentally, all designations of "parts" and "%" as will be used in the following examples mean parts by weight and wt% unless expressly noted otherwise.

Examples

Overmolding compositions were prepared using the ingredients as specified in Table 1.

**Table 1**

| | |
|---|---|
| KRATON G-1651 | styrene-(ethylene/butylene)-styrene (S-E/B-S), block copolymer, linear, sequential, 33%w polystyrene content (PSC), high molecular weight (MW), KRATON Polymers |
| Nova XP 808 | random copolymer of styrene/butadiene, 12-13%w butadiene, MFR (150°C/2.16 kg) = 25 g/10', Nova Chemicals |
| PP HP501L | polypropylene (PP), homopolymer, MFR (230°C/2.16 kg) = 6 g/10', Basell |
| Polystyrol 473D | toughened polystyrene (TPS), high impact, MFR (200°C/5 kg = 12 g/10', BASF |
| Polystyrol 476L | toughened polystyrene (TPS), high impact, MFR (200°C/5 kg) = 5 g/10', BASF |
| Lexan 141R | polycarbonate (PC), GE Plastics |
| ABS DDN/S | acrylonitrile butadiene styrene (ABS), Albis |
| Cycolac GPM 5500 | ABS, GE Plastics |
| Primol 352 | paraffinic oil, Exxon |
| Irganox 1010 | hindered phenol anti-oxidant, Ciba Geigy |
| Irganox PS800 | thio-synergistic anti-oxidant, Ciba Geigy |

The mutual weight ratios of the specific ingredients of each composition and their relevant physical properties have been listed in Tables 2 and 3.

Sample preparation and testing

Compositions were made using a 25 mm or 40 mm co-rotating twin screw extruder with respective throughputs of 8 kg/hr or 20 kg/hr, a screw speed of 250 rpm and temperature settings ranging from 170 to 215°C. Overmolding was done on a Demag dual barrel injection molding machine, equipped with an Axxicon mould. Plaques with thickness of 2 mm of engineering thermoplastic were molded, then the softer material was overmolded onto it. The adhesion between the hard and soft plaques was determined by performing the Renault D41 1916 test on a Zwick mechanical tester. The soft plaque was cut to a width of 15 mm. The engineering thermoplastic plaque was inserted into a moving clamp while the inventive composition was clamped into a fixed part, with an angle of 90°. A test speed of 100 mm/minute was used and the distance between the upper part of the rigid plate and the clamp was of 50 mm.

The same 2 mm thick plaques were used for determination of the hardness (ISO 868) and tensile properties (ISO 37) of the compounds.

It will be appreciated that the results in Tables 2 and 3 that compositions I-VII provide adhesion to an engineering thermoplast substrate when comolded, as compared to the reference composition, comprising the hydrogenated block copolymer, polystyrene, oil and antioxidants only.

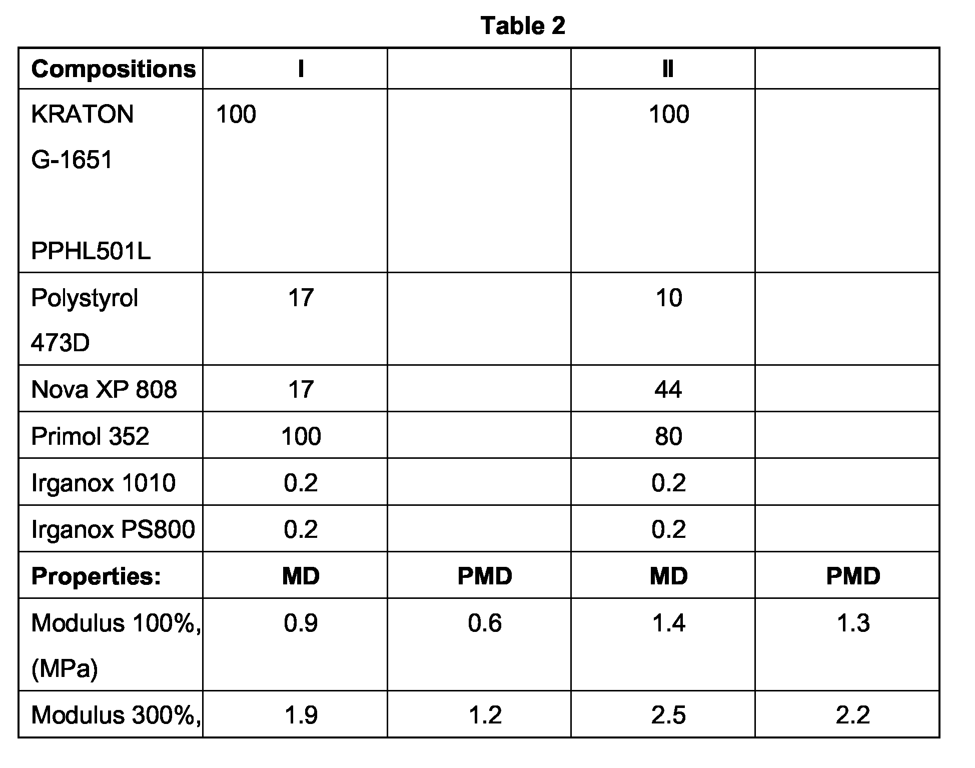

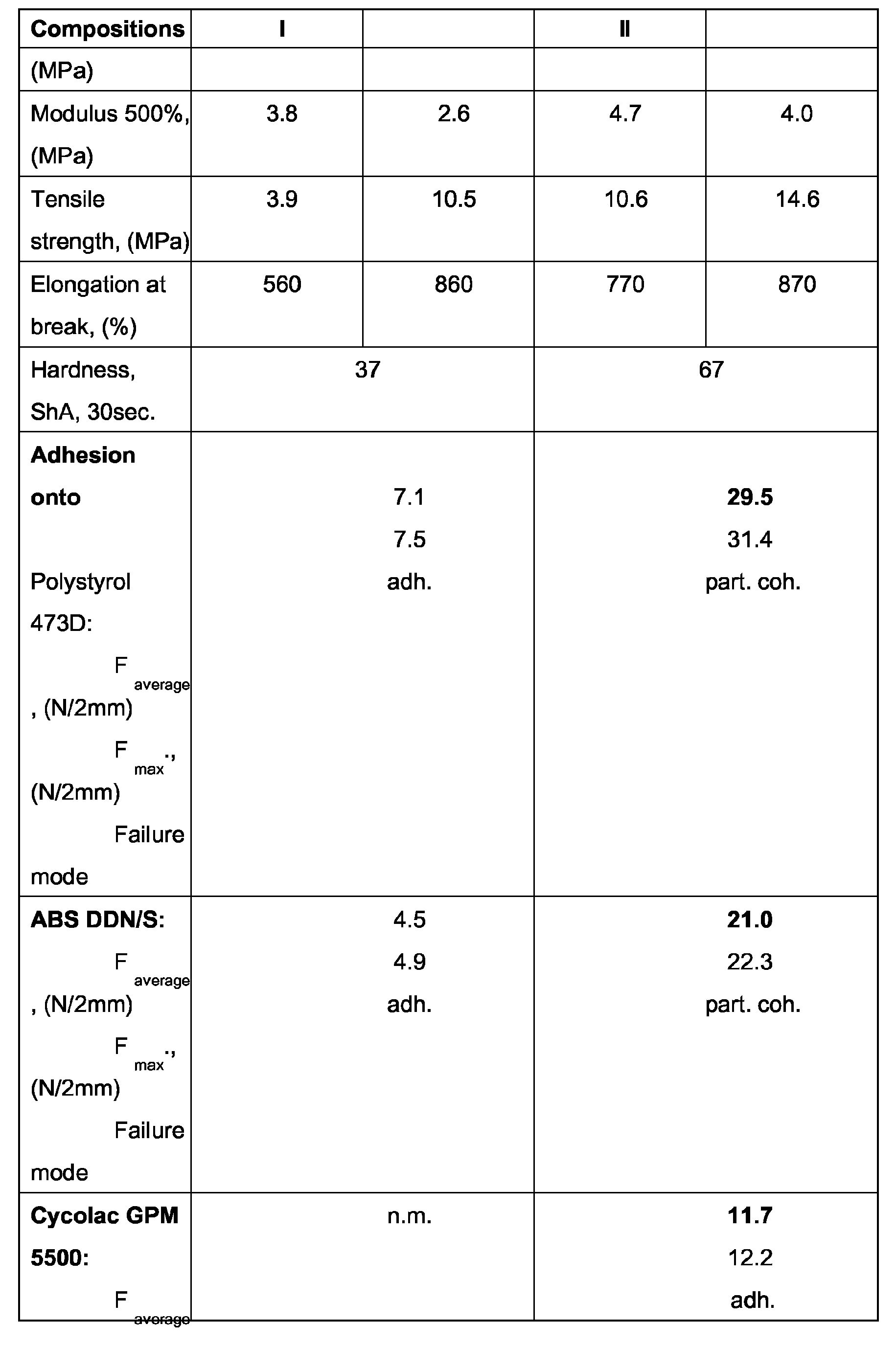

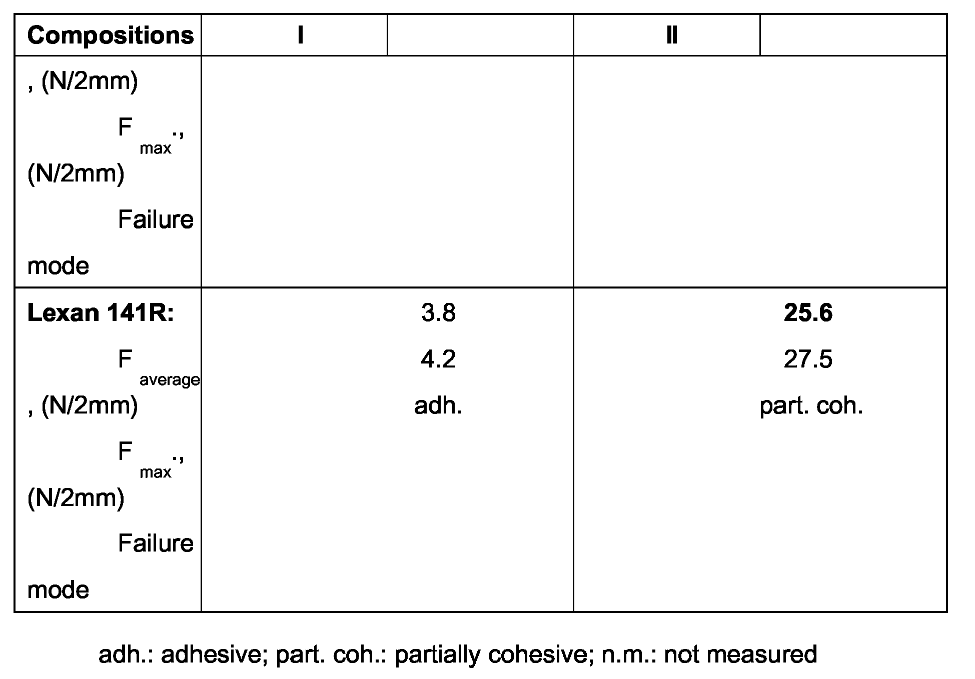

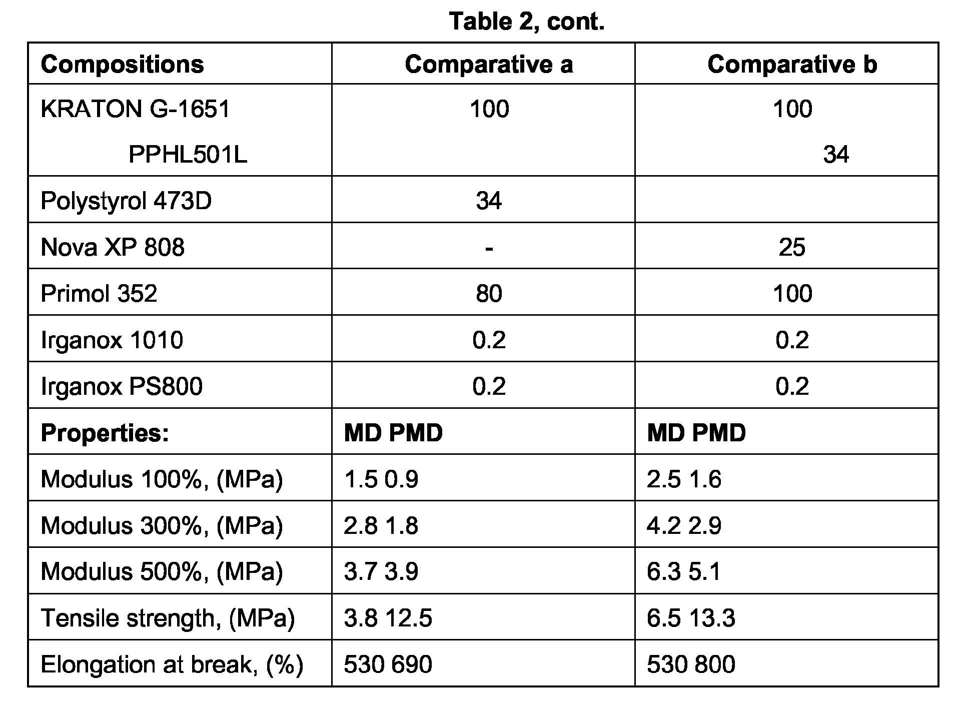

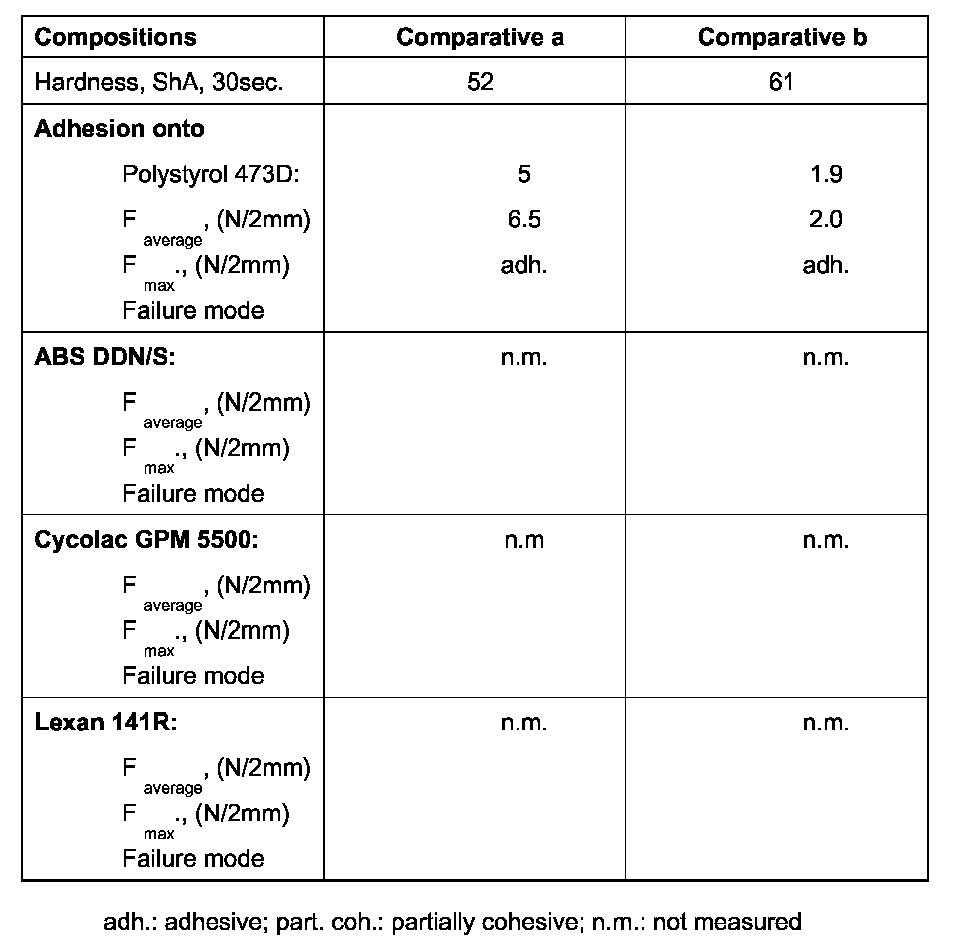

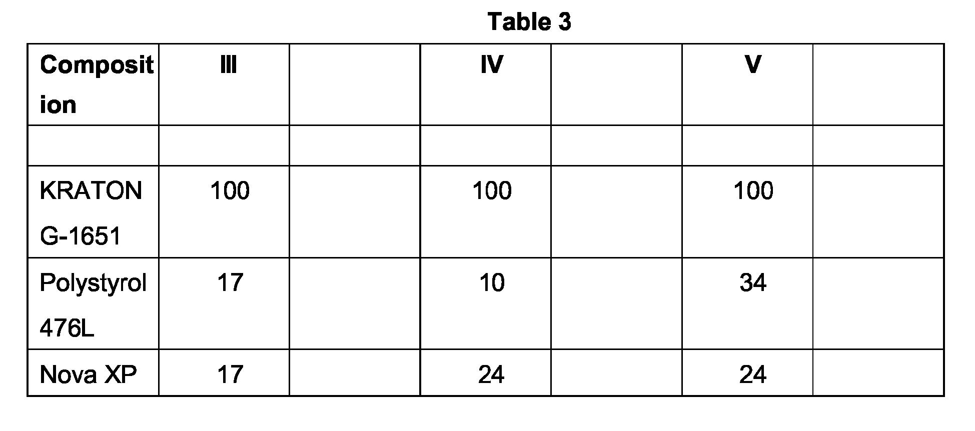

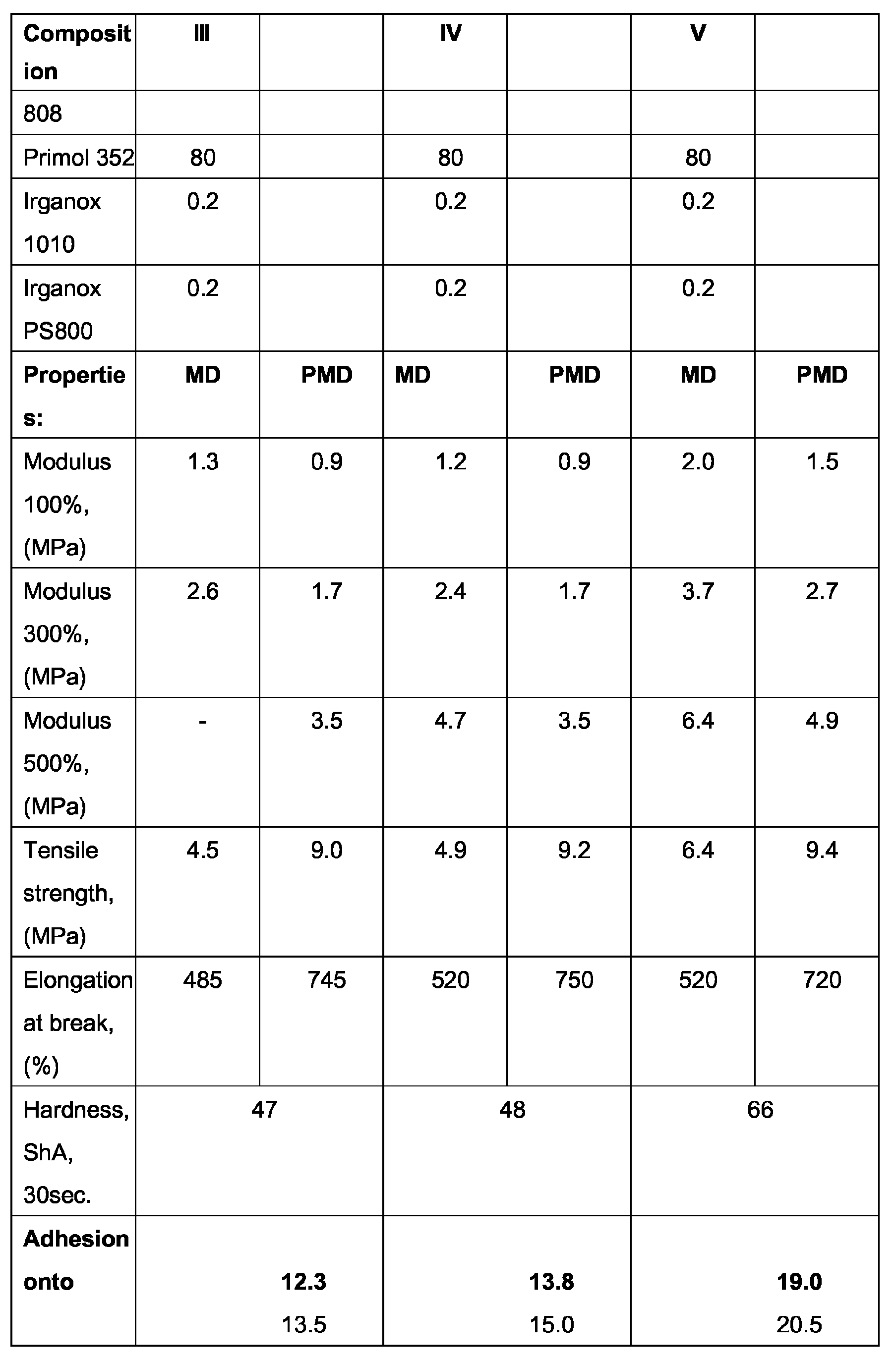

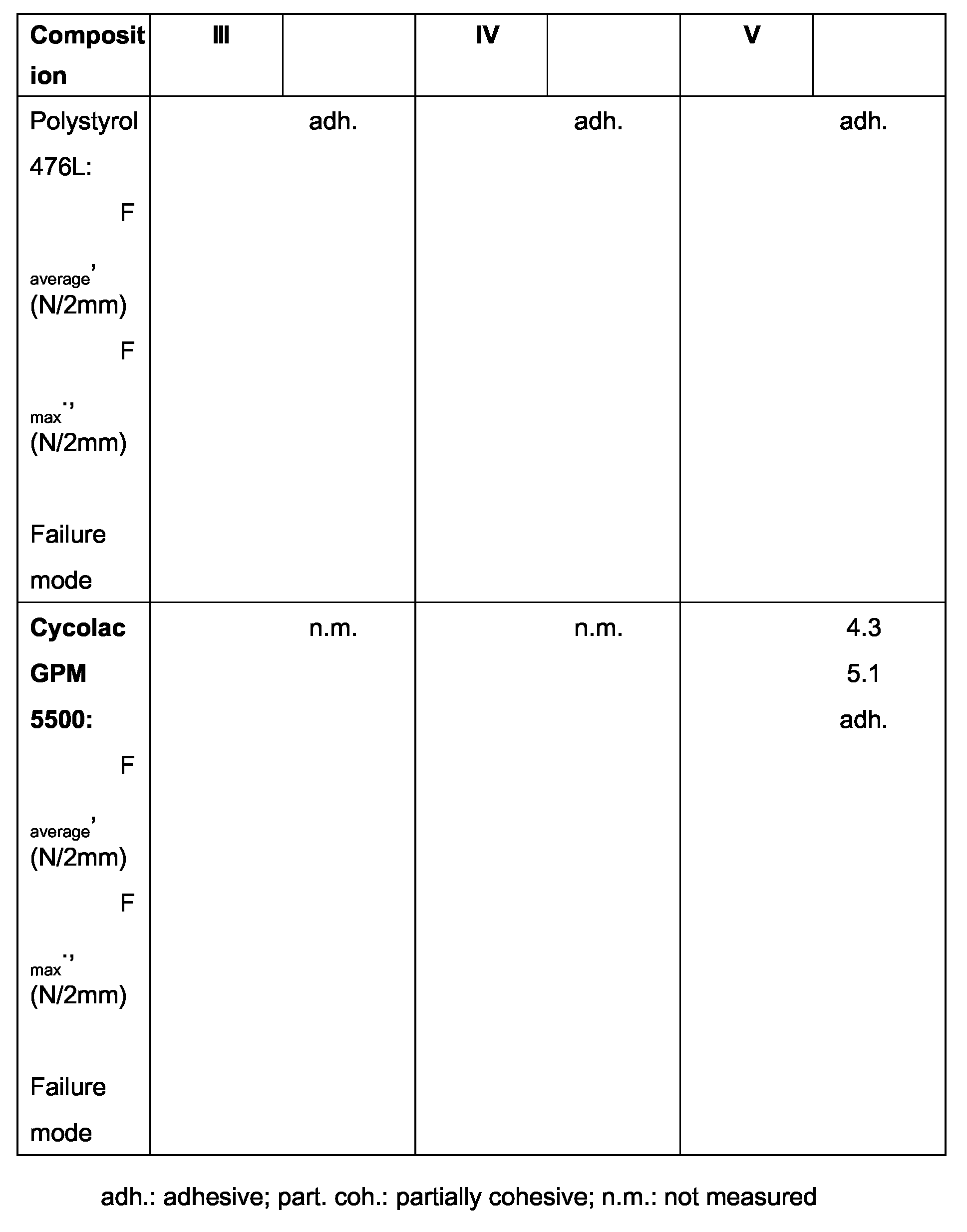

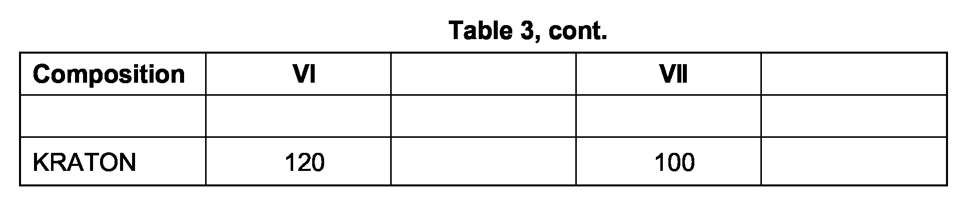

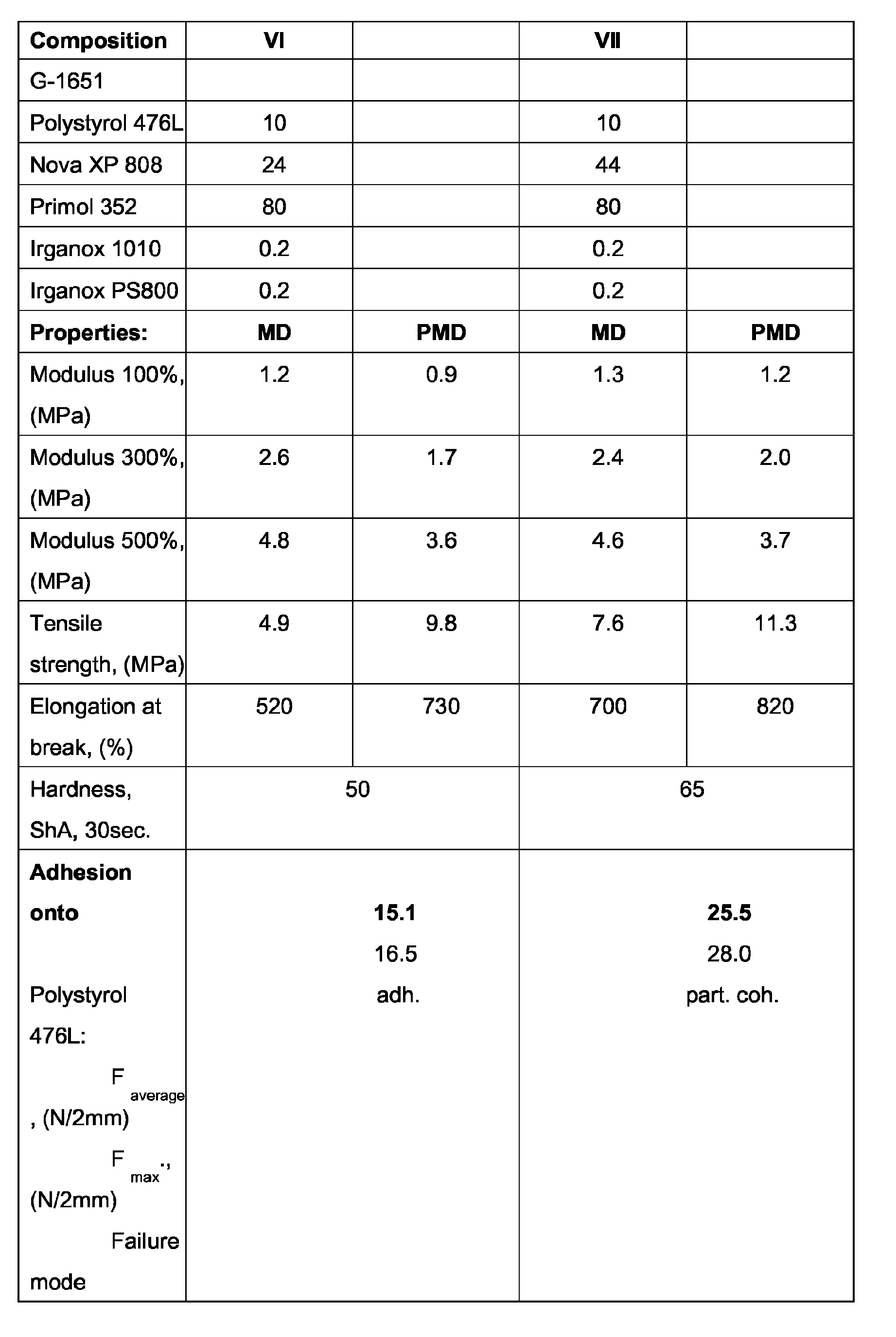

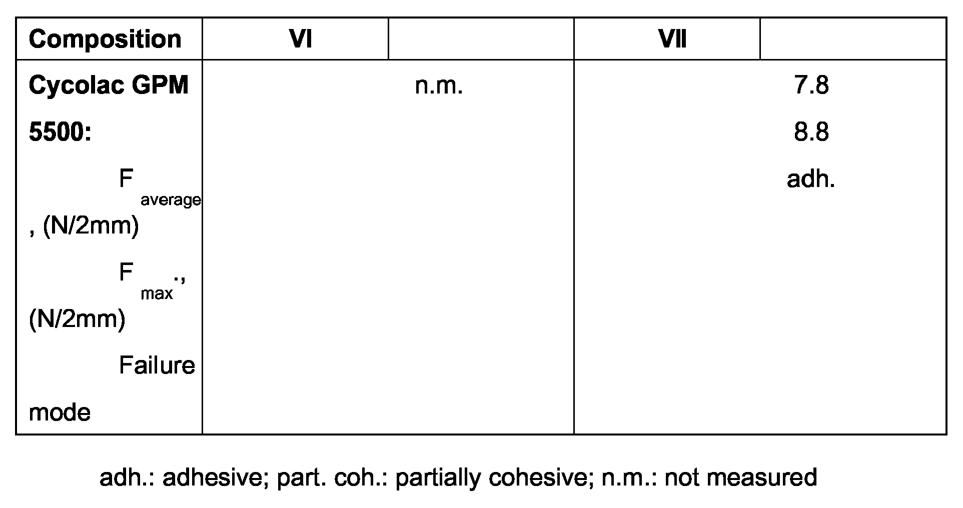

## Claims

1. Hydrogenated styrenic block copolymer composition for overmolding onto an engineering thermoplastic polymer substrate (I), comprising:
a) 100 pbw of one or more hydrogenated monovinyl aromatic block copolymer having at least two resinous endblocks of polymerized monovinyl arene and at least one elastomeric midblock comprising polymerized and subsequently hydrogenated conjugated diene or dienes,
b) from 10 to 60 pbw of a random copolymer of monovinyl arene and a diene, with a diene content of between 5 and 25% and a melt flow rate (MFR, ASTM D 1238-95 @ 150°C/2.16 kg) of 10 to 40 g/10 minutes, and optionally
c) from 0 to 150 pbw of a plasticizer,
d) from 0 to 100 pbw of one or more engineering thermoplastics (II), and
e) from 0 to 2 pbw of antioxidants.

2. Block copolymer composition according to claim 1, wherein component (b) is a random copolymer of styrene and butadiene in a weight ratio of from 90/10 to 75/25.

3. Block copolymer composition according to claim 2, wherein component (b) is a random copolymer of styrene and butadiene in a weight ratio of from 88/12 to 80/20.

4. Block copolymer composition according to claim 1, wherein component (b) occurs in a proportion of from 10 to 30 wt%, based on the weight of the complete composition.

5. Block copolymer composition according to claim 4, wherein component (b) occurs in a proportion of from 13 to 25 wt%, based on the weight of the complete composition.

6. Block copolymer composition according to claim 1, wherein component (a) is a hydrogenated linear triblock copolymer, comprising two poly(styrene) blocks and one hydrogenated poly(butadiene) block, wherein the 1,2-addition (vinyl content) before hydrogenation is from 20 to 50 mole percent, and having a molecular weight from 100,000 to 300,000, a polystyrene content of from 20 to 35 wt% and a coupling efficiency of at least 90 %.

7. Shaped plastic articles, comprising a hydrogenated monovinyl aromatic block copolymer composition as claimed in any one of claims 1 to6, overmolded onto an engineering thermoplastic polymer substrate.
